# EUROPEAN PATENT APPLICATION

(11) **EP 3 053 685 A1**
(43) Date of publication of application: **10.08.2016**
(21) Application number: 16152718.9
(22) Date of filing: 26.01.2016
(51) Int. Cl.: B23D 45/12, B23D 45/20, B23D 45/26, B23D 47/12

(54) **DOUBLE CUTTING MODE CUT-OFF MACHINE**

(30) Priority: 03.02.2015 IT MO20150018
(71) Applicant: FIVES OTO S.P.A., 42022 Boretto, Reggio Emilia (IT)
(72) Inventor: VECCHINI, GIANLUCA, 43123 PARMA (IT); MICALI, LUCIANO, 23824 DERVIO (LECCO) (IT); CHEZZI, ALEARDO, 42022 BORETTO (REGGIO EMILIA) (IT); ANESI, ANDREA, 42019 S.ILARIO D'ENZA (REGGIO EMILIA) (IT)
(74) Representative: Casadei, Giovanni

(57) **Abstract**

A cut-off machine comprising: an electric motor (2) arranged for rotatingly driving a cutting tool (10); a transmission (4) which is so structured as to transmit the rotary motion of the motor (2) to the cutting tool; a control module comprising an inverter, designed to allow adjustment of the rotational speed of the motor (2).

The motor (2) is so structured as to impart, to the cutting tool, a first rotational speed suitable for performing a heating and friction-based cutoff of the material to be cut; the transmission (4) is provided with an at least two-speeds gearbox, which is so configured as to vary the speed transmitted to the tool between the first speed and second speed, the latter being lower than the first speed and suitable for performing a material removal cutoff (slow-speed saw cutoff).

## Description

The invention relates to a double cutting mode cut-off machine.

The invention finds particular utility for the in-line cutting of tubes obtained through the in-line bending of a sheet metal tape.

In the prior art, cutting of steel tubes can be performed through application of several technologies. In regard to the technologies providing use of cutting-off machines which are supplied with blades or circular saws, at least two cutting methods are particularly provided which are termed "slow-speed saw cutoff" and "high-speed saw cutoff".

The slow-speed saw cutoff is a chip-removing cutoff process which is quite similar to any mechanical milling process. Based on the operating parameters a centesimal-per tooth feed and peripheral speeds in the hundreds of m/min are provided. Owing to this technology, a cutoff may be obtained, which is characterized by an excellent surface finish, is burr-free and free of any tube deformation.

The high-speed saw cutoff is a "power" cutoff, wherein the material is sliced by a high-speed rotating blade, with a peripheral speed of about 110 m/s ==> 6600m / min. Within the contact area between blade and tube the temperature increases until the temperature approaches the melting point of the material which is being cut, due to friction between the periphery of the blade and the material itself.

The difference existing between the state of the material to be cut (i.e. a paste-like state material at a temperature near the melting point) and the blade material (i.e. a solid-like state material with properties basically remaining unchanged between operating temperature and ambient temperature), combined with rotation and translation of the blade (feed movements), result in material removal in the form of small chips with continuous and progressive heating of the cutting zone.

The advantages arising from this type of cutting are basically related to the cutting time involved, which is generally lower than the time necessary for performing a material slow-speed saw cutoff, and likewise related to the relative insensitivity to the type of material which is to be cut.

The drawbacks arise instead from considerably high energy demands (to make a comparison, a blade rotating motor of a high-speed saw has a speed of approx. 110 kW, while the motor of a slow-speed saw is in the order of 30 kW, with the size of the tube to be cut being the same); above drawbacks are further due to the presence of burrs on both cutoff sides, the cracking sensitivity resulting from high level mechanical (vibration) and thermal stresses, as well as to the deformation of the tube ends which is likely to occur in the entry zone of the blade.

Because of the high power required, the high rpm of the blade resulting in the need to provide adequate protections for the safety in case of breakage of the blade itself, because of sparks, chips and noise produced during cutoff operations requiring use of soundproof cabins, and because of the poor-quality of the tube finishing which requires subsequent machining, due to all this, the high-speed saw cutoff has been increasingly replaced in recent years by the slow-speed saw cutoff.

On the other hand, the increase in the demand for the so-called "API" tubes, i.e. the tubes for which removal of the inner longitudinally-welded seam is required, has highlighted a limit of the slow-speed saw cutoff (especially with regard to single-blade cutoff machine models, wherein the seam must be cut in order that the tube cutoff can be completed). Said limit is due to the fact that this welding seam of very hard material is arranged internally of the tube in an random position (i.e. not constrained), which often results in breakage of the blade teeth following performance of a few cuttings. This occurs due to instantaneous material loadings onto the single tooth with consequent frequent and random production stops. The high-speed saw cutoff is instead not affected by this issue, since it is predisposed for smoothly cutting the welding seam as well.

Depending on the various types of tube put into production, it may be indeed often required to use both slow-speed saw cutoff and high-speed saw cutoff.

Mechanical and electrical interventions were required so far aimed at replacing different parts of cut-off machines for application of both technologies on a same machine. Such interventions require a rather long time, besides being presently needed at least two motors and two transmissions.

It is an aim of the present invention to provide a cut-off machine which allows to overcome the drawbacks of the currently available machines and in particular to eliminate the need for burdensome cutoff mode changing operations, as well as the need to be provided with two motors and two transmissions.

Further characteristics and advantages of the present invention will better emerge from the detailed description that follows of a preferred embodiment of the invention, illustrated by way of non-limiting example in the appended figures wherein:

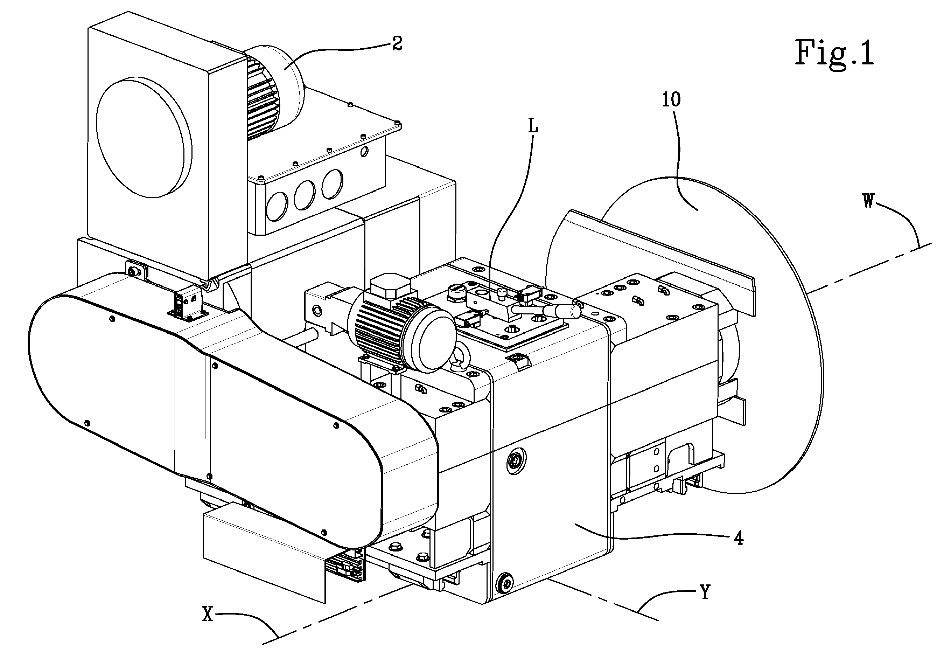

- Figure 1 shows a first schematic view of the machine according to the present invention;

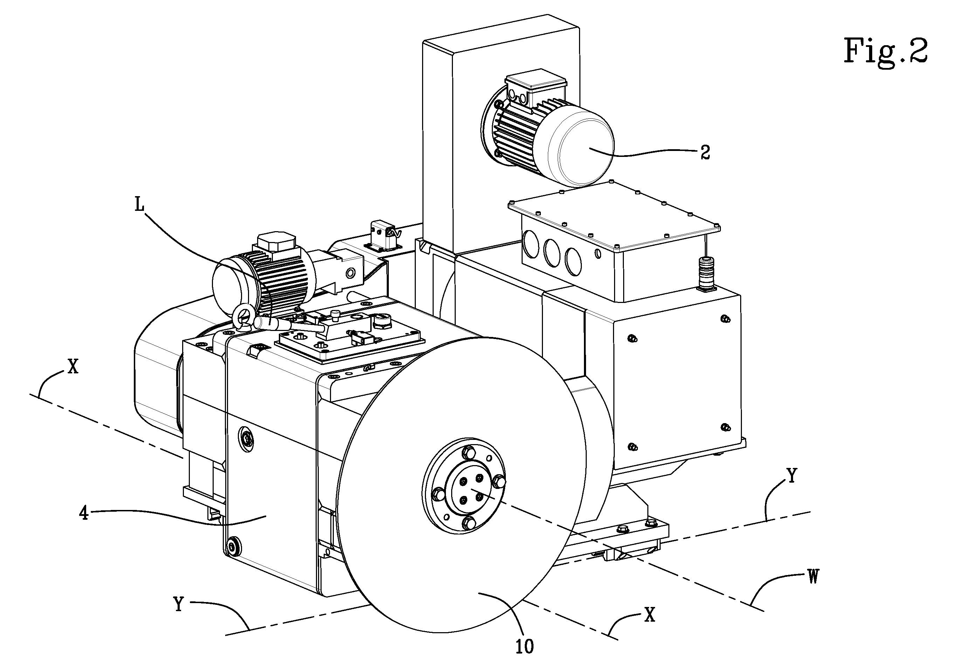

- Figure 2 shows a second schematic view of the machine according to the present invention.

The cut-off machine according to the present invention comprises an electric motor (2), which is so arranged as to rotatingly drive a cutting tool (10) about an axis of rotation (W). A transmission (4), such as a belt and gears transmission, which is so configured as to transmit the rotary motion of the motor (2) to the cutting tool (10). The machine is further provided with a control module (not shown) that comprises an inverter. This control module is arranged for allowing adjustment of the motor's (2) rotational speed. The parts listed above are not described and illustrated in detail, in that they are well within the reach of the men skilled in the art.

The motor (2) is so structured as to confer a first rotational speed to the cutting tool, which rotational speed is suitable for performing a friction and heating-based cutoff of the material to be cut. In other words, the power of the motor (2) is sufficient to perform a "high-speed saw cutoff", wherein the material is being sliced by a high speed rotating blade with a peripheral speed of about 110 m / s ==> 6600m/min. In the contact area between the blade and the tube, the temperature increases until the temperature reaches the melting point of the material which is being cut, due to friction between the periphery of the blade and the material itself.

The transmission (4) is provided with an at least two-speeds gearbox, which is so configured as to vary the speed transmitted to the tool between the first speed and a second speed, the latter being lower than the first speed and suitable for performing a material removal cutoff. The second speed is essentially a speed at which a "slow-speed saw cutoff" is performed for removal of material.

Owing to the combination of a motor (2), which is so dimensioned as to allow a "high-speed saw cutoff", and the transmission (4) provided with a two-speeds gearbox, the machine is made suitable for performing both a "slow-speed saw cutoff ", wherein the cutting tool (10) is actuated at the second rotational speed, and a "high-speed saw cutoff", wherein the cutting tool (10) is actuated at the first rotational speed. The transition between the two cutting modes takes place by simply varying the transmission ratio via a special control device (L), e.g. a lever. The cutting tool (10) may be for example a saw. In the transition between the two cutting modes, it may be required to change only the type of tool, which changing generally takes place quite rapidly and smoothly.

The machine according to the present invention is particularly useful for performing in-line cuttings along a production line with longitudinally welded tubes. As known, through such production lines, there are obtained tubes in a continuous manner, starting from a tape that is folded longitudinally by a plurality of roller stations, up to define a closed tubular shape. The two tape edges too are welded in a continuous manner so that the tube profile can be closed.

The cut-off machine comprises a carriage, not shown in detail, provided with translating means for translating along a longitudinal direction (X) parallel to the axis of rotation (W) of the cutting tool (10). The longitudinal direction (X) is also to be meant as the advancement direction of the continuous tube along the line. In a known way, the cut-off machine is moving parallel to the tube to be cut by performing a stroke which is perfectly synchronous with the advancement of the tube at least for a stretch. During this stroke, the cutting tool (10) is actuated to perform cutting of the tube in a plane perpendicular to the longitudinal axis and to the advancement direction of the tube itself. However, the cutting plane may not be perpendicular to the longitudinal axis of the tube. After the cutting, the cut-off machine moves back via the carriage up to a starting point, wherefrom the cut-off machine is once more connected to the tube which continues to advance for performing a new cutting on a next section of the tube.

The cut-off machine further comprises translating means for translating the cutting tool (10) along a transverse direction (Y) perpendicular to the axis of rotation (W) of the cutting tool. In other words, the cutting tool is movable along the transverse direction (Y) between an outer position, in which it does not interfere with the tube to be cut, and an inner position, in which it is disposed completely through the tube. In the transition from the outer position to the inner position, the cutting tool (10) comes into contact with the tube and progressively performs cutting of the tube on a plane perpendicular to the axis of rotation (W) and the longitudinal axis of the tube.

The machine according to the present invention provides outstanding advantages. From an economic standpoint, the machine allows to reduce the costs associated with the need to have two motors and two transmissions for performing the two cutting types. Further, the machine allows to reduce the time needed for changing the cutting mode since to this purpose it is enough to change the transmission ratio and possibly replace the cutting tool.

## Claims

1. A cut-off machine, comprising: an electric motor (2) arranged for rotatingly driving a cutting tool (10); a transmission (4) which is so structured as to transmit the rotary motion of the motor (2) to the cutting tool; a control module comprising an inverter, designed to allow adjustment of the rotational speed of the motor (2); **characterized in that** the motor (2) is so structured as to impart to the cutting tool a first rotational speed, suitable for performing a heating and friction-based cutoff of the material to be cut; the transmission (4) is provided with an at least two-speeds gearbox, which is so configured as to vary the speed transmitted to the tool between the first speed and second speed, the latter being lower than the first speed and suitable for performing a material removal cutoff.

2. A cut-off machine according to claim 1, wherein the cutting tool (10) is a saw.

3. A cut-off machine according to claim 1 comprising a carriage provided with translating means for translating along a longitudinal direction (x) parallel to the rotation axis (W) of the cutting tool (10).

4. A cut-off machine according to claim 1 comprising translating means for translating the cutting tool (10) along a transverse direction (Y) perpendicular to the rotation axis (W) of the cutting tool.
